Europäisches Patentamt

European Patent Office

Office européen des brevets

(11) Numéro de publication: **0 283 403**
A1

# DEMANDE DE BREVET EUROPEEN

(21) Numéro de dépôt: 88400654.5

(22) Date de dépôt: 18.03.88

(51) Int. Cl.⁴: **B 25 J 9/02**
B 25 J 15/00, B 23 Q 7/04

(30) Priorité: 20.03.87 FR 8703892

(43) Date de publication de la demande:
21.09.88 Bulletin 88/38

(84) Etats contractants désignés:
AT BE CH DE ES GB IT LI NL SE

(71) Demandeur: R.G.D. S.A.
Zone Industrielle des Charrières Cherre
F-72403 La Ferte-Bernard (FR)

(72) Inventeur: Duguet, Daniel
Le Champ des Murs Route de la Ferté-Bernard
F-72320 Vibraye (FR)

Gallois, Alain
Touche Fougère Saint-Maixent
F-72320 Vibraye (FR)

(74) Mandataire: Lemonnier, André
Cabinet LEMONNIER 4, Boulevard Saint-Denis
F-75010 Paris (FR)

(54) Automate manipulateur programmable pour la desserte d'une machine-outil.

(57) La présente invention concerne un automate manipulateur pour le chargement et le déchargement des pièces à usiner sur une machine-outil du type dit à mouvement triaxial.

Conformément à l'invention l'axe horizontal (X) selon lequel s'effectue le mouvement d'approche et d'éloignement de la pièce est perpendiculaire à la fois à la direction (P) de circulation des pièces au cours de ces phases et à l'axe (A) de la broche de la machine-outil, le deuxième axe horizontal (Y) étant perpendiculaire au premier et mobile le long de celui-ci et le troisième axe (Z) étant l'axe vertical perpendiculaire au deuxième axe horizontal et mobile le long de ce dernier et le poignet est constitué par un arbre (13) parallèle au premier axe horizontal (X) monté mobile le long de l'axe vertical (Z) et susceptible de recevoir une rotation autour de son propre axe, la longueur de l'arbre (13) du poignet étant de l'ordre de la distance entre l'extrémité de la course de mobilité des éléments mobiles du manipulateur selon le premier axe (X), d'une part, et l'axe (A) de la broche de la machine-outil, d'autre part.

L'automate manipulateur conforme à l'invention est adaptable à des machines de types divers et présente un degré de compacité élevé.

Fig. 1

EP 0 283 403 A1

## Description

Automate manipulateur programmable pour la desserte d'une machine-outil.

La présente invention concerne les automates contrôlés par ordinateurs assurant le chargement et le déchargement des pièces usinées par une machine-outil.

Les automates manipulateurs dits également robots connus à ce jour pour assurer les opérations de chargement, c'est-à-dire de mise en place avec précision d'une pièce à usiner prélevée à un poste d'alimentation dans le mandrin automatique de la machine-outil, et le déchargement de la pièce après usinage en la retirant du mandrin pour la déposer à un poste d'évacuation, présentent de nombreux inconvénients. Les robots dits à bras articulé compor tent des trajectoires des éléments mobiles du robot qui occupent un espace volumétrique important et variable selon la pièce à manipuler et selon la machine desservie. En raison du caractère non matérialisé physiquement des trajectoires, il est nécessaire, pour éviter les accidents de personne, d'entourer, par une protection dont l'ouverture est asservie à l'arrêt de la machine outil, l'espace dans lequel peut évoluer le bras en plus de l'accès à la partie rotative de la machine-outil proprement dite. Il en résulte un encombrement de l'accès à la machine-outil qui nuit à la surveillance et au réglage de la machine-outil.

Les manipulateurs antérieurement connus sont en principe adaptés pour la desserte d'un type de machine bien défini et ils ne peuvent pas être changés de poste de travail d'autant plus que, pour les robots du type à bras articulé, le centre de gravité du robot peut se déplacer dans des limites étendues, ce qui nécessite un ancrage au sol solide du pied ou embase du robot.

Enfin les automates connus dans ce but sont en général lents du fait que les déplacements spaciaux des différents éléments du manipulateur sont exécutés successivement en décomposant le mouvement et que les deux opérations de déchargement et chargement de la pièce doivent se succéder dans le temps pendant une période d'arrêt de la machine-outil.

Dans EP-A-0021972 on a proposé, pour remédier à la lenteur de ces manipulateurs, de décomposer le mouvement en un déplacement à course fixe effectué à grande vitesse entre deux points définis et un déplacement précis à faible vitesse correspondant à la trajectoire entre le point à atteindre et le point défini voisin. Les deux déplacements sont réalisés par une combinaison de deux ensembles dits à deux et respectivement à trois mouvements orthogonaux. Ce document décrit donc un manipulateur comportant une chaîne d'éléments dont le mouvement est décomposé selon trois axes orthogonaux mais n'enseigne rien sur l'adaptation d'un tel manipulateur à la desserte d'une machine-outil.

Le robot manipulateur qui n'est pas spécifique d'une machine-outil définie étant incorporé entre un ensemble d'amenée des pièces à usiner et d'évacuation des pièces à usiner non spécifique du robot et ladite machine, le positionnement des pièces sur le tapis transporteur ou les palettes d'amenée présente le plus souvent une imprécision qui nuit à la saisie des pièces à usiner et les pièces usinées doivent le plus souvent être rangées manuellement après avoir été déposées d'une façon plus ou moins aléatoire sur un plateau de réception.

La présente invention a pour but de remédier à ces divers inconvénients et de créer un automate manipulateur pilotée par calculateur programmable qui soit de structure compacte, qui peut être associé sand adaptation à sensiblement tous les types de machines-outils en encombrant au minimum l'environnement de cette dernière et qui incorpore son propre système d'amenée et d'évacuation des pièces pour assurer une haute précision du positionnement. Elle a également pour but d'accroître le rendement de la machine-outil en limitant la durée d'arrêt de celle-ci aux opéra tions de retrait et de mise en place de la pièce sur la machine, les phases d'approche et d'évacuation de la pièce s'effectuant pendant la phase d'usinage et les déplacements élémentaires des éléments de la structure étant effectués simultanément au maximum de la vitesse des moyens d'entraînement de chaque élément.

L'invention a en conséquence pour objet un automate manipulateur pour le chargement et le déchargement des pièces à usiner sur une machine-outil, lequel comporte une embase supportant un manipulateur du type comportant une chaîne d'éléments dont le mouvement est décomposé selon trois axes orthogonaux, le poignet portant les préhenseurs de manipulation étant monté sur l'élément de la chaîne situé à l'opposé de l'embase et ce poignet présentant au moins une possibilité de rotation autour d'un axe, caractérisé en ce que l'axe horizontal selon lequel s'effectue le mouvement d'approche et d'éloignement de la pièce manipulée de la machine est situé à un niveau supérieur à celui du niveau de circulation dans les phases d'amenée et d'évacuation des pièces à usiner et perpendiculaire à la fois à la direction de circulation des pièces au cours de ces phases et à l'axe de la broche de la machine-outil, le deuxième axe horizontal étant perpendiculaire au premier et mobile le long de celui-ci et le troisième axe étant l'axe vertical perpendiculaire au deuxième axe horizontal et mobile le long de ce dernier et le poitnet étant consituée par un arbre parallèle au premier axe horizontal monté mobile le long de l'axe vertical et susceptible de recevoir une rotation autour de son propre axe, la longueur de l'arbre du poignet étant de l'ordre de la distance existant, en position d'utilisation, entre l'extrémité de la course de mobilité des éléments mobiles du manipulateur selon le premier axe, d'une part, et l'axe de la broche de la machine-outil, d'autre part.

Selon une autre caractéristque le poignet porte à son extrémité deux éléments préhenseurs dont les axes de prise sont orthogonaux. Les deux éléments préhenseurs peuvent être constitués par deux pinces, les mâchoires constituant les deux pinces étant mobiles dans deux plans perpendiculaires excentrés par rapport à l'axe de l'arbre constituant le poignet.

Selon une autre caractéristique, les pièces sont approvisionnées sur un plateau positionné manuellement ou automatiquement dans un poste d'approvisionnement, ledit plateau étant pris en charge à ce poste par un chariot muni d'un dispositif de centrage et de soulèvement et d'abaissement du plateau, ce chariot étant mobile de façon contrôlée selon la direction de circulation pour présenter le plateau dans une position définie précise par rapport aux trois axes du manipulateur. Le dispositif d'approvisionnement des pièces à usiner et d'évacuation des pièces usinées pourrait toute-fois être d'un autre type notamment lorsque l'approvisionnement et l'évacuation sont assurés selon le système dit "en vrac". C'est ainsi que les pièces peuvent être amenées par un tapis transporteur ou analogue muni d'un dispositif de positionnement précis des pièces au point de prise par le poignet manipulateur, l'évacuation étant assurée par tapis transporteur ou analogue à direction de transport parallèle à celle du tapis transporteur d'amenée.

Le manipulateur après mise en position devant une machine-outil peut être reprogrammé en prenant, comme référence zéro, l'une des pinces amenée en coïncidence avec l'axe du mandrin de la machine. Un mouvement quelconque du manipulateur comportant un déplacement selon certains ou l'ensemble des trois axes et une rotation du poignet peut être réalisé en une seule phase, les quatre composantes du mouvement étant commandées en même temps. Plus précisément les déplacements étant commandés par des moteurs à impulsions, un mouvement quelconque se décompose en quatre nombres d'impulsions de sens positif ou négatif à envoyer aux quatre moteurs et, au début d'un cycle correspondant à un mouvement quelconque, les impulsions de sens convenables peuvent être envoyées simultanément aux quatre moteurs. En raison du positionnement du poste d'amenée et d'évacuation des pièces entre l'automate manipulateur et la machine, le mouvement à effectuer par le poignet du manipulateur est minimal de sorte que la durée du cycle de fonctionnement est constituée pour l'essentiel par la durée de l'opération d'usinàge.

Du fait des deux organes préhenseurs prévus à l'extrémité du poignet, le manipulateur, après prise en charge d'une pièce par l'une des pinces, amène par le même mouvement la pince vide en position devant le mandrin pour reprendre une pièce usinée et la pince chargée dans une position à 90°; après retrait de la pièce usinée saisie par la pince vide, une rotation de 90° du poignet présente la pièce à usiner devant le mandrin et la positionne puis, après retrait des pinces du volume délimité par le carter de pro tection du tour, la porte du carter de protection peut être fermée et l'opération d'usinage peut commencer pendant que le manipulateur vient déposer la pièce usinée sur le plateau, charge une nouvelle pièce à usiner et l'amène à proximité de la porte du tour.

L'automate manipulateur conforme à l'invention satisfait donc parfaitement, grâce à sa structure d'ensemble, aux buts que s'est fixés l'invention.

Le calculateur de commande est logé dans le carter du bâti et l'entraînement des chariots selon les trois axes est, selon un mode de réalisation préférentiel, assuré, pour chaque chariot, par un moteur à impulsions dont le pignon de sortie engrène avec une courroie crantée montée en bande sans fin.

D'autres caractéristiques de l'invention apparaîtront à la lecture de la descritpion détaillée d'un exemple de réalisation faite ci-aprés avec référence aux dessins ci-annexés dans lesquels :

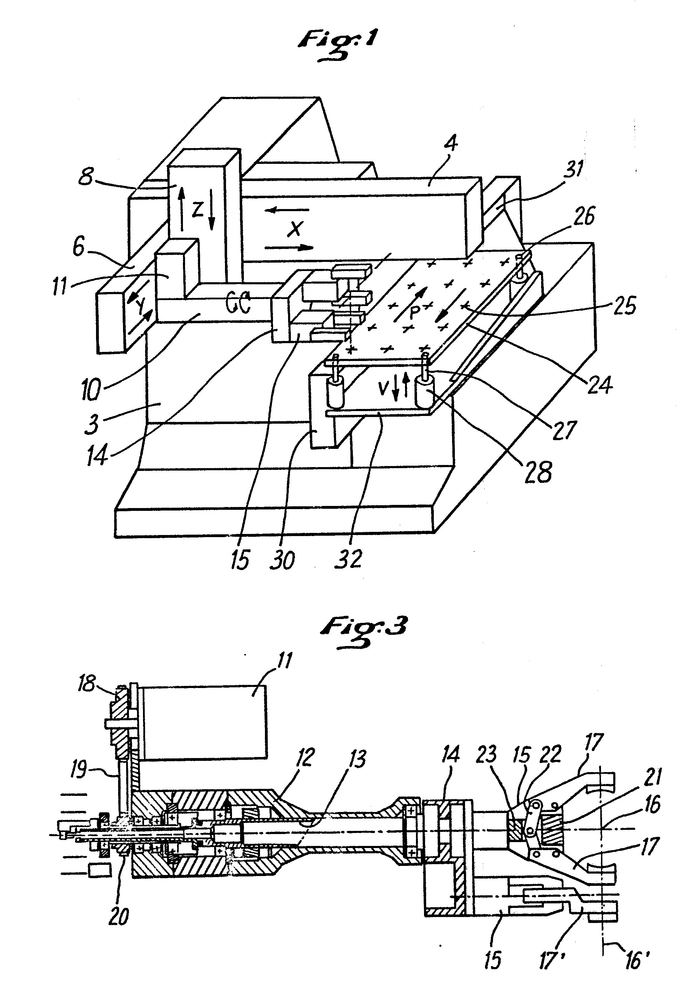

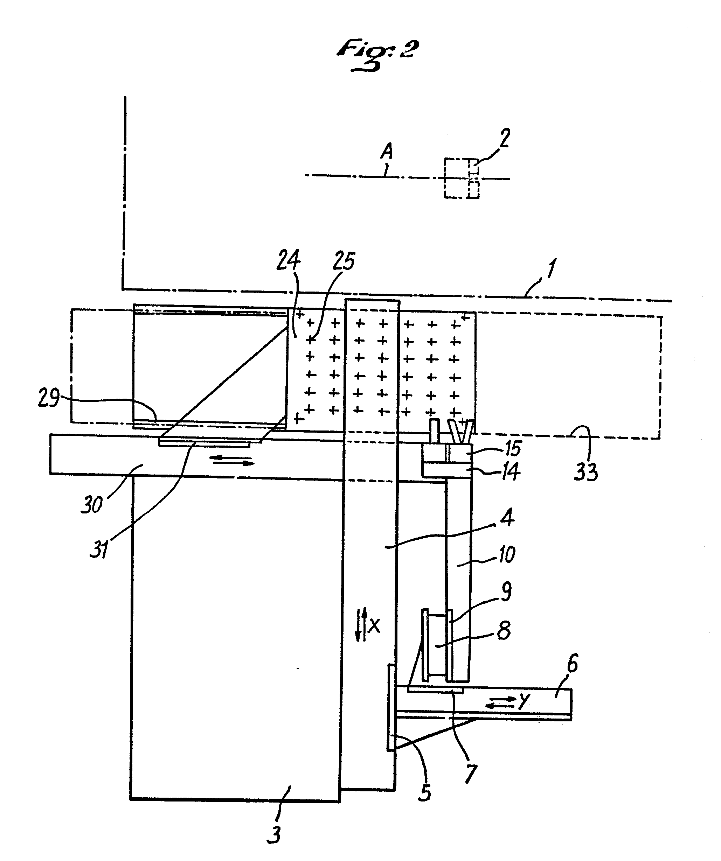

La figure 1 est une vue en perspective schématique illustrant la morphologie d'ensemble de l'automate manipulateur; la figure 2 est une vue en plan schématique correspondant à la figure 1 et la figure 3 est une vue de détail en coupe partielle du poignet de la machine.

Dans les dessins la référence 1 désigne un cadre en traits mixtes matérialisant schématiquement le contour de la machine-outil, ici un tour, avec lequel est associé l'automate manipulateur de l'invention, et la référence 2 le mandrin du tour dans lequel doivent être mises en place les pièces.

La référence 3 désigne le bâti de l'automate manipulateur dans lequel est incluse l'armoire renfermant l'électronique de commande et notamment le calculateur programmable. La référence 4 désigne le caisson formant bras qui matérialise l'axe des X. Conformément à l'invention l'axe des X, donc le caisson 4, est perpendiculaire à l'axe A du mandrin 2. Dans ce caisson sont montés les moyens de guidage, constitués de préférence par des douilles à billes solidaires du chariot 5 roulant sur deux barres horizontales parallèles solidaires du caisson 4. Le chariot 5 porte le caisson 6 également horizontal et perpendiculaire au caisson 4, caisson 6 qui matérialise l'axe des Y. Dans le caisson 4 sont également logés les moyens contrôlant le déplacement du chariot 5 qui sont de préférence constitués par un moteur pas à pas non représenté dont le pignon de sortie denté entraine une courroie crantée montée selon une boucle horizontale et en un point de laquelle est ancré le chariot 5.

Sur le caisson 6 formant le bras de déplacement selon l'axe des Y est monté, avec les mêmes moyens de guidage et de contrôle du déplacement, un chariot 7 qui porte un caisson vertical 8 formant le bras de déplacement selon l'axe des Z. Sur ce caisson vertical 8 est monté, avec les mêmes moyens de guidage et de contrôle du déplacement selon l'axe des Z, un chariot 9 qui porte le poignet 10 décrit plus en détail ci-aprés avec référence à la figu re 3.

Le poignet 10 comporte un moteur d'entraînement pas à pas 11 fixé sur la chariot 9 et un carter de forme générale cylindrique 12 qui est parallèle à l'axe des X, c'est-à-dire au caisson 4. Dans ce carter 12 est monté à rotation l'arbre 13 sur l'extrémité du quel est fixée solidaire à la rotation l'embase 14 des pinces de préhension 15. Comme nettement visible sur les dessins, les deux pinces 15 ont leurs plans d'action orthogonaux, c'est-à-dire que lorsque l'axe 16 dont s'écartent ou se rapprochent les branches 17 de l'une des pinces 15 est horizontal (Fig. 3), l'axe 16' correspondant des branches 17' de l'autre pince 15 est vertical. Les pinces 15 sont en outre montées sur l'embase 14 pour être équidistantes de l'axe de l'arbre 13 de sorte qu'elles se trouvent substituées dans leurs positions par des rotations de 90° de l'arbre 13. La rotation de l'arbre 13 est contrôlée depuis le moteur 11 par une transmission comportant le pignon de sortie 18 du moteur 11, un courroie crantée 19 et un pignon 20 calé sur l'arbre 13. L'ouverture et la fermeture des pinces 15 sont commandées par des biellettes 22 actionnées depuis un vérin double effet par l'intermédiaire d'une pièce de liaison 23. Les états des deux vérins de commande commandant les pinces 15 sont contrôlés par des capteurs magnétiques et leur alimentation en air est assurée par une canalisation d'air comprimé, non représentée, qui passe avec les conducteurs électriques dans l'arbre creux 13.

La référence 21 désigne un poussoir pneumatique monté sur celle des deux pinces qui a pour rôle de placer les pièces dans le man drin 2. Lorsque la pièce saisie par la pince 17 est amenée devant le mandrin ouvert, le porte-pinces se déplace selon l'axe des Y pour engager la pièce dans les mors, la pince 17 s'ouvre et simultanément la pression exercée par le poussoir 21 applique la pièce sur la butée intérieure des mors ou sur une butée placée à l'intérieur de la broche du tour, après quoi les mors du mandrin se referment et la pince 17 est dégagée.

L'amenée et l'évacuation des pièces soumises à l'usinage sont assurées par un plateau 24 qui comporte dans sa surface des emplacements repérés, notamment des logements 25, pour les pièces et des logements tels que des orifices 26 pour le positionnement du plateau 24 sur les tiges 27 de vérins 28.

Le plateau 24 portant les pièces à usiner est amené manuellement ou par un transporteur quelconque à un poste de chargement délimité par les traits mixtes 29. Un caisson 30 est monté en avant du bâti 3, vers la machine-outil 1 desservie, caisson qui est horizontal, transversal à l'axe des X et en-dessous du volume dans lequel se déplacent les pinces 15 par combinaison des déplacements selon les axes X, Y et Z. Ce caisson porte un chariot 31 qui est guidé et déplacé de façon contrôlée de la même manière que les chariots 5, 7 et 9 dans les caissons 4, 6 et 8. Le chariot 31 porte une plaque embase 32 aux quatre coins de laquelle sont fixés les vérins 28 dont la position, et partant la position du plateau 24 engagé par les orifices 26 sur les tiges 27 des vérins 28, peut être contrôlée avec précision selon la direction des flèches P. Lorsque le plateau est amené à l'emplacement 29, le cha riot 31 amène les vérins 28 en coïncidence avec les orifices 26 du plateau et les vérins 28 s'allongent pour soulever le plateau selon l'axe vertical V. Le chariot 31 est alors déplacé selon la direction P pour amener le plateau en dessous du caisson 4 dans la zone accessible par les pinces 15, le plateau pouvant être déplacé jusque dans la position représentée en pointillé en 33 (Fig. 2), pour pouvoir amener les diverses rangées d'emplacements 25 sur le plateau 24 sensiblement en face du mandrin 2 de manière à réduire le déplacement des pinces 15 pour amener une pièce à usiner prélevée sur le plateau 24 devant le mandrin 2 de la machine-outil 1 et ramener la pièce usinée de ce mandrin sur le plateau 24.

## Revendications

1. Un automate manipulateur pour le chargement et le déchargement des pièces à usiner sur une machine-outil, lequel comporte une embase supportant un manipulateur du type comportant une chaîne d'éléments dont le mouvement est décomposé selon trois axes orthogonaux, le poignet portant les préhenseurs de manipulation étant monté sur l'élément de la chaîne situé à l'opposé de l'embase et ce poignet présentant au moins une possibilité de rotation autour d'un axe, caractérisé en ce que l'axe horizontal (X) selon lequel s'effectue le mouvement d'approche et d'éloignement de la pièce manipulée de la machine est situé à un niveau supérieur à celui du niveau de circulation dans les phases d'amenée et d'évacuation des pièces à usiner et perpendiculaire à la fois à la direction (P) de cirulation des pièces au cours de ces phases et à l'axe (A) de la broche de la machine-outil, le deuxième axe horizontal (Y) étant perpendiculaire au premier et mobile le long de celui-ci et le troisième axe (Z) étant l'axe vertical perpendiculaire au deuxième axe horizontal et mobile le long de ce dernier et le poignet étant constitué par un arbre (13) parallèle au premier axe horizontal (X) monté mobile le long de l'axe vertical (Z) et susceptible de recevoir une rotation autour de son propre axe, la longueur de l'arbre (13) du poignet étant de l'ordre de la distance existant, en position d'utilisation, entre l'extrémité de la course de mobilité des éléments mobiles du manipulateur selon le premier axe (X), d'une part, et l'axe (A) de la broche de la machine-outil, d'autre part.

2. Un automate manipulateur selon la revendication 1, caractérisé en ce que le poignet porte à son extrémité deux éléments préhenseurs (15) dont les axes de prise (16-16') sont orthogonaux.

3. Un automate manipulateur selon la revendication 2, caractérisé en ce que les deux éléments préhenseurs sont constitués par deux pinces (15), les mâchoires (17) constituant les deux pinces étant mobiles dans deux plans perpendiculaires excentrés par rapport à l'axe de l'arbre (13) constituant le poignet.

4. Un automate manipulateur selon l'une quelconque des revendications 1 à 3, caractérisé en ce que les pièces sont approvisionnées sur un plateau (24) positionné manuellement ou automatiquement dans un poste d'approvisionnement (29), ledit plateau étant pris en charge à ce poste par un chariot (31-32) muni d'un dispositif (27-28) de centrage et de soulèvement et d'abaissement du plateau, ce chariot étant mobile de façon contrôlée selon la direction de circulation (P) pour présenter le plateau (24) dans une position définie précise par rapport aux trois axes (X, Y, Z) du manipulateur.

5. Un automate manipulateur selon l'une quelconque des revendications 1 à 3, caractérisé en ce que les pièces sont amenées par un tapis transporteur ou analogue muni d'un dispositif de positionnement précis des pièces au point de prise par le poignet manipulateur, l'évacuation étant assurée par tapis transporteur ou analogue à di rection de transport parallèle à celle du tapis transporteur d'amenée.

0283403

**Fig.1**

**Fig.3**

0283403

*Fig. 2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 021 972  (SORMEL S.A.)<br>* Page 7, lignes 12-29; figure 5 * | 1 | B 25 J    9/02<br>B 25 J   15/00<br>B 23 Q    7/04 |
| Y,A | DE-A-2 257 577  (VEB WERKZEUGMASCHINENKOMBINAT)<br>* Page 4, ligne 19 - page 5, ligne 26 * | 1 | |
| A | GB-A-1 448 863  (CLARKE CHAPMAN LTD)<br>* Page 3, ligne 75 - page 4, ligne 16 * | 2,5 | |
| A | IBM TECHNICAL DISCLOSURE BULLETIN, vol. 26, no. 4, septembre 1983, pages 1822-1823, New York, US; R.L. KAFTAN et al.: "Multi-gripper robot"<br>* En entier * | 2,3 | |
| A | DE-B-1 237 005  (BURGHARDT)<br>* Colonne 7, lignes 28-48 * | 4 | |
| A | WO-A-8 501 002  (COD INTER TECHNIQUES S.A.) | | |

**DOMAINES TECHNIQUES RECHERCHES (Int. Cl.4)**

B 25 J
B 23 Q

Le présent rapport a été établi pour toutes les revendications

| Lieu de la recherche | Date d'achèvement de la recherche | Examinateur |
|---|---|---|
| LA HAYE | 13-06-1988 | LAMMINEUR P.C.G. |